# EUROPÄISCHE PATENTANMELDUNG

(11) **EP 1 193 474 A1**
(43) Veröffentlichungstag der Anmeldung: **03.04.2002**
(21) Anmeldenummer: 01122909.3
(22) Anmeldetag: 25.09.2001
(51) Int. Cl.: G01F 1/58

(54) **Durchflussmessanordnung zur magnetisch-induktiven oder kapazitiven Bestimmung von Durchflüssen**

(30) Priorität: 29.09.2000 DE 10048519
(71) Anmelder: ABB PATENT GmbH, 68526 Ladenburg (DE)
(72) Erfinder: Die Erfindernennung liegt noch nicht vor
(74) Vertreter: Schmidt, Karl Michael, Dipl.-Phys.

(57) **Zusammenfassung**

Die Erfindung betrifft eine Durchflußmeßanordnung zur magnetisch-induktiven oder kapazitiven Bestimmung von Durchflüssen durch ein Meßrohr, wobei Meßelektroden angeordnet sind, die über die Innenoberfläche des Meßrohres mit dem Meßmedium in Berührung stehen. Um hierbei zu erreichen, daß bei einer Durchflußmeßanordnung der gattungsgemäßen Art, die Korrosionsfestigkeit sowie die Isolationseigenschaften weiterhin verbessert werden, ist erfindungsgemäß vorgeschlagen, daß das Meßrohr aus Kunststoff besteht.

## Beschreibung

Die Erfindung betrifft eine Durchflußmeßanordnung zur magnetisch-induktiven oder kapazitiven Bestimmung von Durchflüssen durch ein Meßrohr, wobei im Meßrohr Elektroden angeordnet sind, die über die Innenoberfläche des Meßrohres mit dem Meßmedium in Berührung stehen.

Durchflußmeßanordnungen dieser Art sind vielfältig bekannt. Dabei wird ein Meßrohr verwendet, welches über einen entsprechenden Abschnitt vom Meßmedium durchströmt wird, dessen Durchfluß zu bestimmen ist. Über einen entsprechenden Abschnitt des Meßrohres ist um den Außenumfang entsprechend arrangiert eine magnetisch-induktive Anordnung bzw. eine kapazitive Einrichtung.

Eine Einrichtung dieser Art ist aus dem deutschen Patent DE 197 05 436 C2 bekannt. Die dort offenbarte Meßanordnung ist auf ihrer gesamten Oberfläche mit einer elektrisch isolierenden Beschichtung versehen, um, wie allgemein üblich, die Elektroden von dem Rohrkörper zu isolieren, und zum anderen, um die Elektroden in die Elektrodenbohrungen im Meßrohrkörper isoliert einzusetzen und letztlich außen gleichzeitig eine korrosionsresistente Schutzschicht zu erzeugen. Dadurch können preiswertere korrosionsanfälligere Metalle verwendet werden und die Isolierung in einem preiswerteren und einfacheren Arbeitsgang erreicht werden.

Der Erfindung liegt somit die Aufgabe zugrunde, eine Meßanordnung der gattungsgemäßen Art dahingehend noch weiter zu vereinfachen, daß die Korrosionsfestigkeit sowie die Isolationseigenschaften weiterhin verbessert werden und gleichzeitig die Anordnung einfacher darstellbar ist.

Die gestellte Aufgabe wird bei einer Durchflußmeßanordnung der gattungsgemäßen Art erfindungsgemäß durch die kennzeichnenden Merkmale des Patentanspruches 1 gelöst.

Weitere vorteilhafte Ausgestaltungen der Erfindung sind in den abhängigen Ansprüchen angegeben.

Die Erfindung geht dabei ausgehend vom Stand der Technik konsequente Schritte weiter, indem nicht solch ein vollständig ummanteltes metallisches Rohr verwendet wird, sondern daß das Rohr nun insgesamt aus einem elektrisch nicht leitfähigen und nicht magnetischen Material besteht, wobei ein entsprechender Kunststoff konstruktiv so ausgelegt wird, daß das Meßrohr der gewünschten Druckbelastung standhält. Das heißt, das Meßrohr besteht insgesamt aus einem entsprechenden Material.

In weiterer vorteilhafter Ausgestaltung ist angegeben, daß ein chemisch resistenter Kunststoff gewählt wird. Hierdurch vereinen sich zum einen isolierende Eigenschaften wie auch chemische Resistenz durch die Verwendung eines einzigen Werkstoffes und den Verzicht aufwendiger Oberflächenbeschichtung.

In weiterer vorteilhafter Ausgestaltung ist angegeben, daß die Meßelektroden so ausgebildet sind, daß im Übergangsbereich zweier Elektrodenabschnitte unterschiedlichen Durchmessers bei eingebrachter Elektrode zwischen Elektrode, Elektrodenbohrung und Meßrohr und Befestigungslement ein Hohlraum entsteht, in den hinein bei entsprechendem Befestigungszug lokal Kunststoff des Meßrohres hineinfließt.

Hierzu ist die Elektrode in zwei Elektrodenabschnitte unterschiedlichen Durchmessers unterteilt. Der Elektrodenkopf, der an der Meßrohrinnenseite Berührung mit dem Meßmedium hat, weist einen leicht überstehenden Kragen auf, so daß er in einer durch das Meßrohr hindurch angelegten Öffnung randseitig und einseitig fixiert anliegt. Der erste Abschnitt größeren Durchmessers der Elektrode ist geringfügig kürzer als die Meßrohrbohrung im Meßrohr tief ist. Das heißt, dort befindet sich der Übergangsbereich zu dem Elektrodenabschnitt kleineren Querschnitts. Der Übergangsbereich ist dabei angefast, wobei der Bereich größeren Durchmessers noch innerhalb der Meßrohrbohrung liegt und das Ende des Übergangsbereiches zum Übergang in den Elektrodenabschnitt kleineren Durchmessers endet, in etwa bei der Tiefe der Meßrohrbohrung. Dies gilt für den eingelegten montierten Zustand, nämlich den angelegten Elektrodenkopf. Wird nun auf der gegenüberliegenden Seite, das heißt, von außen, das heißt außerhalb des Meßrohres, nun ein Befestigungselement beispielsweise in Form einer Schraubmutter auf den Elektrodenabschnitt kleineren Durchmessers aufgeschraubt, bis die Schraubmutter an der Außenwandung des Meßrohres zur Anlage kommt, so entsteht ein mechanischer Zug auf die Elektrode, und gleichzeitig ein widerhaltender Druck auf das Meßrohr in diesem Bereich. Dieser widerhaltende Druck bewirkt bei einer bestimmten Größe desselben, daß im angefasten Übergangsbereich der Elektrodenabschnitte nun in dem dort vor Festziehen der Schraubmutter entstehenden Hohlraum, Kunststoffmaterial des Meßrohres hineinfließt. Somit füllt sich der Hohlraum durch die Fließwirkung des Kunststoffes unter dem entstehenden Widerhaltdruck des Schraubelementes. Dadurch entsteht eine geeignete Dichtwirkung, ohne daß ein separates, ansonsten anfälliges Dichtungselement eingelegt werden müßte. Da das Meßrohr im Betrieb gegebenenfalls unter mehr oder weniger großer Druckbelastung steht, bietet die Verwendung eines Kunststoffrohres als Meßrohr in Verbindung mit dieser Verbindungs- und Dichttechnik der Meßelektroden eine geeignete Abdichtung, so daß eine Reihe von sich kumulativ begünstigender Umstände bei der erfindungsgemäßen Lösung zusammen kommen.

Die Erfindung ist in der Zeichnung dargestellt und nachfolgend näher beschrieben.

Es zeigt:

Fig. 1: Durchflußmeßanordnung schematisch im Querschnitt.

Fig. 2: Detaildarstellung der montierten Elektrode in der Meßrohrwandung.

Fig. 3: Detail aus Figur 2, Hohlraum im Übergangsbereich.

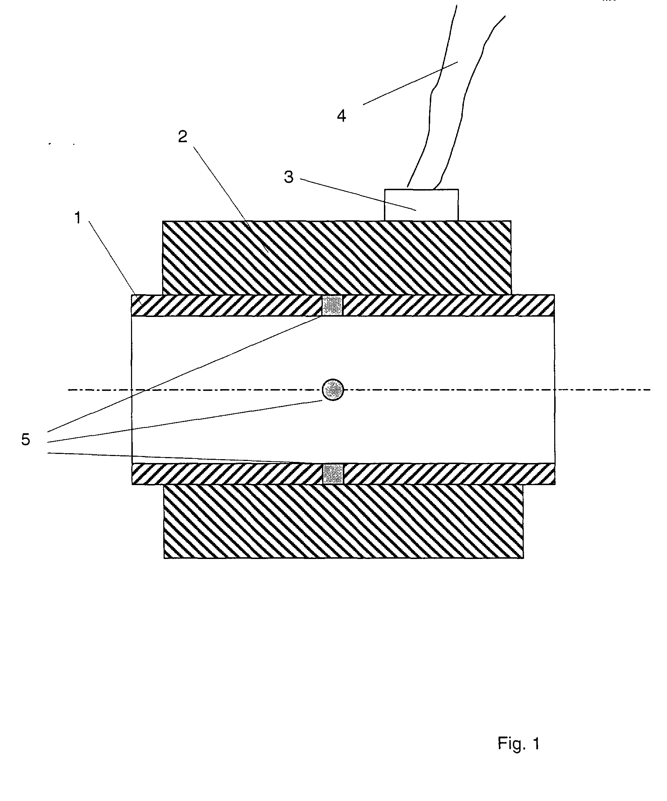

Figur 1 zeigt einen Querschnitt einer schematisch dargestellten Durchflußmeßanordnung. Hierbei ist ein Meßrohr 1 vorgesehen, welches in erfindungsgemäßer Weise aus Kunststoff besteht und vom Meßmedium durchströmt wird. Zur Ankopplung beispielsweise an dem Rohrsystem sind beidendig hier nicht weiter dargestellte Flansche angeordnet, um das selbe in ein Rohrsystem einzubringen.

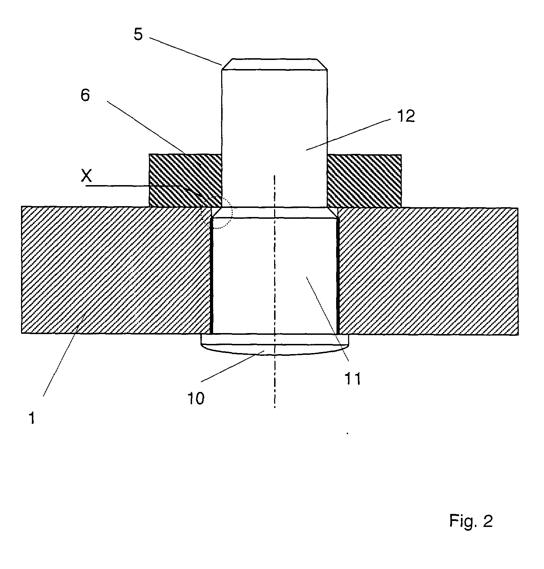

Innerhalb der Rohrwandung münden Elektroden 5 so in das Meßrohr ein, daß sie mit der in Figur 2 noch näher dargestellten Kopfseite Berührung mit dem Meßmedium haben. Die besagten Elektroden stehen in Verbindung mit einem außerhalb des Meßrohres bzw. um das selbe herum angeordneten Magnetsystemes 2. Sie bringen elektrische und elektromagnetische Feldgrößen in das Meßmedium ein, um den Meßeffekt zu erzeugen und den Durchfluß dabei meßbar zu machen. Außerhalb des Meßrohres bzw. im Bereich der Magnetanordnungen 2 ist ein Anschlußkasten 3 vorgesehen, in welchem hier nicht weiter dargestellte interne Kabel mit den nach außen geführten externen Kabeln 4 verbunden werden.

Figur 2 zeigt eine Detaildarstellung mit einem Ausschnitt des Meßrohres 1, welches hier nur als Wandabschnitt dargestellt ist. Das Meßrohr 1 weist an den bereits aus Figur 1 dargestellten Stellen eine Meßrohrbohrung für jeweils eine Elektrode 5 auf. Die Elektrode 5 selbst ist unterteilt in zwei Elektrodenabschnitte 11 und 12 unterschiedlichen Durchmessers. Der Abschnitt größeren Durchmessers ist mit 11 gekennzeichnet und der Abschnitt kleineren Durchmessers mit der Positionsziffer 12. An einer Seite weist die Elektrode einen Elektrodenkopf 10 auf, welcher randseitig über die Meßrohrbohrung hinausstehend eine Art Kragen aufweist. Auf diese Weise wird eine sichere Anlage in der fertig montierten Stellung der Elektrode gewährleistet. Direkt an den Elektrodenkopf 10 schließt der Elektrodenabschnitt 11 größeren Durchmessers an, der insgesamt auch innerhalb der Meßrohrbohrung des Meßrohres 1 anliegt. Die Meßrohrbohrung des Meßrohres 1 ist dabei durchmesserbezogen an diesen Elektrodenabschnitt angepaßt. Ferner weist die Elektrode einen Übergangsbereich vom Elektrodenabschnitt 11 größeren Durchmessers zum Elektrodenabschnitt 12 kleineren Durchmessers auf. Dieser Übergangsbereich ist in diesem Beispiel angefast und mit dem Detailkreis X gekennzeichnet. Die Tiefenabmessung bzw. Längenabmessung von Elektrodenabschnitt 11 größeren Durchmessers und der Meßrohrbohrung im Meßrohr 1 ist so bemessen, daß der Übergangsbereich noch innerhalb des Abschnittes der eingelegten Elektrode im Meßrohr 1 beginnt und etwa randseitig an die Außenoberfläche des Meßrohres 1 im Beginn des Elektrodenabschnittes 12 kleineren Durchmessers endet. Auf diese Weise entsteht, wie im Detailkreis X dargestellt, ein kreisringförmiger Hohlraum, wobei der Kreisring eine dreieckige Querschnittskontur aufweist. Von außen wird ein Befestigungselement 6 beispielsweise in Form einer Schraubmutter auf den Elektrodenabschnitt 12 kleineren Durchmessers aufgeschraubt. Dieser weist hierzu entsprechend eine zumindest abschnittsweise Einbringung oder Anbringung eines Gewindes auf. Wird nun das Schraubelement 6 fest auf den entsprechenden Elektrodenabschnitt 12 aufgeschraubt und liegt der Elektrodenkopf 10 schlüssig an der Innenwandung des Meßrohres 1 an, so entsteht ein Zug auf die Elektrode 5. Gleichzeitig entsteht an der Abstützfläche des Befestigungslementes 6 auf die Außenwandung des Meßrohres 1 eine Druckbelastung, so daß das Material des Meßrohres 1 in den besagten Hohlraum X hineinfließt.

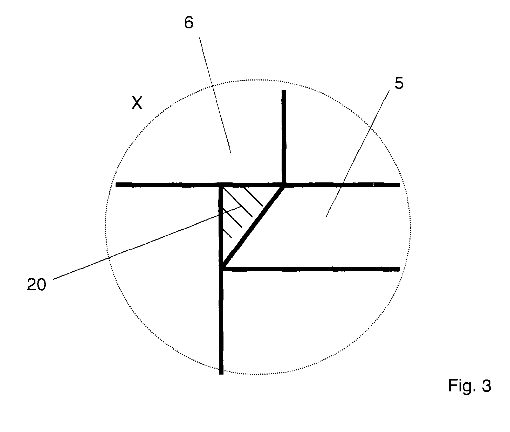

Figur 3 zeigt noch einmal im Detail das in Figur 2 mit X dargestellte Detail im Bereich des Hohlraumes. Der Hohlraum ist hier mit der Positionsziffer 20 gekennzeichnet und hat bei einer entsprechenden runden Elektrode eine Kreisringform mit Dreieckquerschnitt. Durch das Befestigungslement 6 entsteht Zug innerhalb der Elektrode 5 und Druck auf das Meßrohr 1. Durch diesen Druck und die Tatsache, daß das Meßrohr aus Kunststoff besteht, welcher in geeigneter Weise fließfähig sein sollte, wird unter der Druckbelastung des Befestigungselementes 6 Kunststoff des Meßrohres 1 durch Fließwirkung in den entsprechenden Hohlraum 20 gedrückt. Hierdurch entsteht eine zuverlässige Dichtwirkung, die auch gegenüber hohen Druckbelastungen innerhalb des Meßrohres standhält. Auf diese Weise vereinfacht sich zum einen die Abdichtung der Elektroden im Meßrohr und zum anderen kann das Kunststoffmeßrohr auf einfache Weise hergestellt werden und erübrigt außerdem auch eine gesonderte Isolationsbeschichtung, daß Kunststoff elektrisch und magnetisch nicht leitend ist.

## Patentansprüche

1. Durchflußmeßanordnung zur magnetisch-induktiven oder kapazitiven Bestimmung von Durchflüssen durch ein Meßrohr, wobei Meßelektroden angeordnet sind, die über die Innenoberfläche des Meßrohres mit dem Meßmedium in Berührung stehen,
**dadurch gekennzeichnet,**
**daß** das Meßrohr aus Kunststoff besteht.

2. Durchflußmeßanordnung nach Anspruch 1,
**dadurch gekennzeichnet,**
**daß** ein chemisch resistenter Kunststoff gewählt wird.

3. Durchflußmeßanordnung nach Anspruch 1 oder 2,
**dadurch gekennzeichnet,**
**daß** die Meßelektroden im Übergangsbereich zweier Elektrodenabschnitte (11,12) unterschiedlichen Durchmessers so ausgebildet sind, daß bei eingebrachter Elektrode (5) zwischen Elektrode (5), Elektrodenbohrung im Meßrohr (1) und Befestigungselement (6) ein Hohlraum (20) entsteht, in den hinein bei entsprechendem Befestigungszug lokal Kunststoff des Meßrohres (1) hineinfließt.

4. Durchflußmeßanordnung nach Anspruch 3,
**dadurch gekennzeichnet,**
**daß** die Elektrode (5) einseitig und zum Meßraum hinweisend einen flachen Elektrodenkopf (10) aufweist, der im Durchmesser größer als der Elektrodenschaft (11) ist, welcher durch eine Meßrohrbohrung des Meßrohres (1) hindurchgeführt ist.

5. Durchflußmeßanordnung nach einem der vorhergehenden Ansprüche,
**dadurch gekennzeichnet,**
**daß** der Übergang von Elektrodenschaftabschnitt (11) zu Elektrodenabschnitt (12) im montierten Zustand innerhalb der Meßrohrbohrung des Meßrohres (1) liegt, in dem die Elektrode (5) eingebracht ist.

6. Durchflußmeßanordnung nach einem der vorhergehenden Ansprüche,
**dadurch gekennzeichnet,**
**daß** ein mechanischer Zug auf die Elektrode (5) und Fließdruck auf das Meßrohr (1) erzeugendes Befestigungslement an der dem Elektrodenkopf (10) gegenüberliegenden Seite der Elektrode (5) angeordnet ist.

7. Durchflußmeßanordnung nach einem der vorhergehenden Ansprüche,
**dadurch gekennzeichnet,**
**daß** der Durchmesser des Elektrodenabschnittes (11) größer als der Durchmesser des Elektrodenabschnittes (12) ist.
